# EUROPEAN PATENT SPECIFICATION

(11) **EP 2 681 965 B1**
(45) Date of publication and mention of the grant of the patent: **17.12.2014**
(21) Application number: 12705886.5
(22) Date of filing: 28.02.2012
(51) Int. Cl.: H04L 29/12, H04W 4/04

(54) **METHOD FOR DETERMINING AN UNKOWN ADDRESS OF A LOCATION SERVER IN A WIRELESS NETWORK OFFERING LOCATION-BASED SERVICES**
VERFAHREN ZUR BESTIMMUNG EINER UNBEKANNTEN ADRESSE EINES LOKALISIERUNGSSERVERS IN EINEM DRAHTLOSEN NETZWERK FÜR STANDORTABHÄNGIGE DIENSTE
MÉTHODE DE DÉTERMINATION D'UNE ADRESSE INCONNUE DE SERVEUR DE LOCALISATION DANS UN RÉSEAU SANS FIL PROPOSANT DES SERVICES BASÉS SUR LA LOCALISATION

(30) Priority: 01.03.2011 ES 201130264 U
(43) Date of publication of application: 08.01.2014
(73) Proprietor: Telefónica, S.A., 28013 Madrid (ES)
(72) Inventor: MARTÍNEZ OLANO, Demetrio, E-28013 Madrid (ES); JIMÉNEZ HOLGADO, José Antonio, E-28013 Madrid (ES); SORRIBAS MOLLÓN, Rafael, E-28013 Madrid (ES); VALLECILLO ÁLVAREZ, María Dolores, E-28013 Madrid (ES); ISCAR BAUTISTA, David, E-28013 Madrid (ES)
(74) Representative: Carlos Hernando, Borja
(86) International application number: PCT/EP2012/053327
(87) International publication number: WO 2012/116972

(56) References cited:
- US-A1- 2005 153 706
- US-A1- 2008 228 654
- "3rd Generation Partnership Project; Technical Specification Group Services and System Aspects; Architecture aspects of Home NodeB and Home eNodeB (Release 9)", 3GPP STANDARD; 3GPP TR 23.830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 September 2009 (2009-09-01), pages 1-55, XP050363911,

## Description

### Field of the art

The present invention generally relates to a method for mobile location in a wireless network offering location-based services, comprising using a location server for locating a user mobile processing device based on specific triggers, and more particularly to a method providing said mobile location when the location server has an unknown address or when a new location server needs to be used.

### Prior State of the Art

Location-based services (LBS) have had an important increase in the recent years as a consequence of the popularisation of devices based on GPS (Global Positioning System) positioning. These GPS devices, or more generically GNSS (Global Navigation Satellite System) which includes other navigation satellite systems as Galileo, Glonass, etc., have been applied to very different fields and purposes. Their diffusion among the mass market was firstly started by the navigation systems for vehicles (PND -Portable Navigation Device-).

In addition to the satellite system-based positioning, it is possible to obtain the location of a user or device by other technologies:
- Mobile network-based positioning: for mobile devices connected to operator cellular networks, either on GSM (2G), UMTS (3G) or LTE (Long Term Evolution) technologies.
- Wireless network-based positioning: for devices connected to WiFi networks, UWB (Ultra Wide Band), etc.
- IP-based positioning: Generic mechanism aiming to locate a device connected to any IP network such as the Internet.
- Positioning based on sensors and radio-frequency technologies, such as RFID (Radio-Frequency Identification).

In the last years, the main application area for LBS has extended beyond the first applications for navigation or guidance through streets/roads, emerging a wide variety of uses and applications.

The most "traditional" and typical location technology within location services or platforms is that based on satellite networks (GPS, Galileo, etc.). These technologies have the main advantage of a very precise estimation of the position, which accuracy range may be between 3 and 20 meters, depending on the exact conditions and the positioning system (satellite network) employed. However, this satellite technology has as one of its greatest disadvantages the need of being outdoors (or near a window) so the signals from the satellites can be captured by the receiver. This presents many difficulties when trying to obtain the location of people or mobile terminals in different environments (which combine both open and enclosed spaces indoors). For these indoor environments, it is necessary to seek other positioning technologies that can be used in all circumstances, regardless of the environment. It is in these cases when positioning solutions based on mobile network (GSM, UMTS, LTE...), or in general any wireless network (WiFi, WiMax, UWB...), show their advantages.

For location in indoor environments, the simplest solution is using the traditional operator global networks, which are deployed over a large area (such as an entire country), interconnecting the various antennas or base stations and forming a mesh or grid of cells that can discern the user's position depending on the base stations which the user is connected to or covered by. This technology, which works relatively well, has the problem that the precision is rather small, since the estimation of the position is based on the cells defined by the base stations (and more specifically the distance between these base stations) and there may be cases where the size of these cells is too large (even several kilometres), so the accuracy of the estimate may be too low. Although there are improvements and refinements to the cell-based location techniques, it is not possible to provide high accuracy in all environments.

In situations where high precision is required in closed or indoor environments (no GPS coverage), it is necessary to adopt newer and more precise technologies. In this case, the new mobile communication technologies such as Ultra Wide Band (UWB) allow greater accuracy and precision when used for the location of users or terminals.

Sometimes the devised services or scenarios require the definition of geographic areas that are "sensitive" to the location of users or terminals, allowing the handling of automatic report events when users (with capacity of motion) interact with the defined area. Thus, it may be necessary for a particular application (as would be the management of alarms, access control to a compound, restriction of movement of individuals, etc.) to define a geographical area so that the system is able to detect, automatically and without user intervention, when someone gets in, comes out, remains inside or outside the zone. Upon any of these "events", the system must be able to receive some form of notification in order to proceed with the associated action or mechanism.

In recent years, due to the growing popularity of location-based services, different standards and specifications have appeared in order to standardise and simplify the development of such services. These standards also are intended to give a comprehensive and universal framework for the unification of methods and implementations, allowing the interconnection and interoperability of various components or systems that may have been developed separately.

Within the standardisation efforts, one of the main activities is the work of OMA (Open Mobile Alliance), which has sought to standardise the technologies and architectures used for the development and deployment of LBS services.

With regard to service delivery architectures LBS, there are two main paradigms that have been used since the beginning of such services:
- Control plane architectures: They use circuit-switched networks for data transmission and communication assistance in order to obtain the position of the terminals. These architectures have several characteristics:
   ∘ Require updates to multiple network elements to handle standard protocols
   ∘ Support for old or legacy terminals (except A-GPS)
   ∘ Support location of emergency calls
- User plane architectures: They use packet switching network and protocols (TCP / IP) for exchanging data and information needed to locate the terminals. Some of their most important features are:
   ∘ Modification of network elements is not required
   ∘ First versions of these architectures do not support location of emergency calls
   ∘ They are easy to deploy (do not require updates on the elements of the operator network, with a consequent saving of resources) and allow for greater interoperability between components and applications developed by different parties.

User plane architectures, because of their greater flexibility, interoperability, and lower cost of deployment, seem to have become the most popular choice in recent years for the development and deployment of location-based services, replacing control plane architectures, now considered obsolete (which is normal considering that their appearance was much earlier).

With regard to the standards used on these architectures, the first standard to mention would be the MLP (Mobile Location Protocol), which emerged when the control plane architectures were the only one existing. The MLP is a protocol at application level in order to obtain the position of "mobile stations" (mobile telephones, PDAs, etc..) independently of the underlying network technology. MLP is the interface between a location server and a Localization Services (LCS) client.

Another used standard is SUPL (Secure User Plane Location), which is a standard designed for using in user plane architectures, as its name indicates. It is, therefore, more up-to-date and attempts to resolve some of the problems presented by the standards initially oriented control plane. It is based on IP communications and interfaces for all communications, thereby eliminating the need to know the internal details of the underlying network. It was designed with some key goals in mind:
- Make the A-GPS positioning compatible with existing networks, with minimum changes.
- Supporting different location techniques (A-GPS, Galileo, wireless network, WiFi, etc.) transparently to the application developer.

The SUPL standard is currently in version 2.0, which introduced new features and advantages over the original version. Some of the key improvements are:
- Support of new technologies based on WiFi positioning and future developments (WiMax).
- Support of the European navigation system Galileo.
- Support UDP / IP and SIP Push communication (facilitating their integration into IMS architectures).
- Support location of emergency calls (including emergency call in IMS networks).
- New mechanisms for automatic location, through the use of "triggers" (triggers), which can be programmed on a regular basis, or when the user enters or leaves a certain area, etc... This feature opens a new range of applications, such as targeted advertising to a particular geographical area, generation of alarms when entering or leaving an area (for example, parental supervision or elderly) and warning of disasters in the case of being within the evacuation area.
- Support for location requests from terminal to terminal (a mobile device requests the position of another terminal, without having to make the request to the location server).

As shown from the above characteristics, the SUPL standard in the version 2.0 was the first to devise standardised mechanisms for defining and managing areas "sensitive" to the movements of users, so triggers may be associated to events that occur automatically when users interact with the (logical) area defined by the system.

Many location-based services that are developed or deployed today follow "proprietary" architectures and technologies not compliant to standards.

This situation is beginning to change with the widespread adoption of the OMA SUPL standard, promoting user plane architectures that involve the use of networks and protocols in IP-based data. However, the SUPL 2.0 is still fairly recent and there are not many implementations available. This situation is even more evident in the client side, since there is no record of any mobile phone business (for example, between those that incorporate features of A-GPS), which incorporates a compatible client with SUPL 2.0.

In any case, it is foreseeable that in the coming months / years SUPL 2.0 will gain commercial relevance and adoption. This popularity will lead to greater use and deployment of services that incorporate the new features of SUPL 2.0, among which we can cite the support for "sensitive" areas and automatic events associated with these areas.

Although the SUPL 2.0 standard is about being "agnostic" or "transparent" to the location technology being used below (GPS, cell ID, WiFi, etc.), the fact is that the support of certain positioning technologies is not well covered in the standard, especially in the case of those technologies most recent appeared, such as the case of UWB (Ultra Wide Band).

The SUPL 2.0 standard is lacking or does not cover some aspects of implementation that are necessary for the proper functioning of location-based services. To cite one example, when a terminal wishes to be contacted by A-GPS, it is necessary to know the (IP) "address" of the server that provides A-GPS assistance data in the location (list of visible satellites, almanac, etc...). Normally in these cases inflexible deployment solutions are chosen, such as statically setting the address of the A-GPS server in the configuration of the mobile phone, which means that the address is previously known, and this address will not change over time (the server will always be available). If you wish to change the A-GPS server, there is not a defined method to know the new address of the server.

This problem may not be too frequent in the case of locations based on A-GPS, as it can be argued that the change of the A-GPS server is very unusual. However, in the case of other location technologies, such as those based on UWB networks, the issue is much more problematic. Similarly to what happened in the example above, when one wants to use a UWB-based location, he must have some form of contact with the UWB location server, which will be responsible for exchanging information with the terminal or mobile to locate. While in the case of A-GPS is only necessary to know the address of the A-GPS server, which could be global and available worldwide, in the case of UWB is not enough to have a "global" UWB location server, since UWB networks may be multiple and various, and each of them can be configured and deployed according to different criteria. Therefore, to allow a mobile terminal to be connected dynamically to different UWB networks, it is necessary a mechanism to find the address of the location server which is operating in each UWB network.

Related patent applications or other literature documents have been proposed similar to the one described in the present application proposal. For instance, patent application US 2005/153706 *"Providing location information in a visited network"* relates to communication of information when providing information about a location of a mobile user equipment visiting a network other than a home network. On contrary of the present proposal, the communication between the positioning systems is performed by using the user plane, which is the standard SUPL. Patent application US 2005/153706 describes how to locate GPS using SUPL in order to send location information and therefore obtaining their latitude and longitude coordinates, which are worth in outdoor but not in indoor scenarios (which is where the UWB network used by the present invention is).

Another related document is *"*Architecture aspects of Home NodeB and Home eNodeB (Release 9)" 3GPP TR 23.830*,* a communication standard to describe the interaction between the mobile networks. In said document the eNBs have a similar performance as low power antennas that are installed inside the homes in order to improve the coverage of the mobile network. But, on contrary, it doesn't describe the same control areas configuration used in the present proposal.

### Description of the Invention

It is necessary to offer an alternative to the state of the art which covers the gaps found therein, particularly those related to the lack of methods or mechanisms for finding the address of the location server which is operating in each UWB network or other kind of networks.

To that end, the present invention provides a method for mobile location in a wireless network offering location-based services, comprising:
- defining and managing at least one indoor area sensitive to the movements of user mobile processing devices,
- detecting events that occur automatically when a user mobile processing device interacts with said at least one indoor defined area; and
- using a location server for locating said user mobile processing device based on at least programmed triggers and/or on triggers associated to said detected events.

The method of the invention further comprises, in a characteristic manner, when said location server has an unknown address or when a new location server needs to be used, determining said unknown address of said location server or the address of said new location server by collecting and exchanging parameters relating thereto between said user mobile processing device and at least said location server or at least said new location server.

Other embodiments of the invention are described in appended claims 3 to 9, and in a subsequent section related to the detailed description of several embodiments.

The present invention focuses on the type of functionality related to services that require the definition of sensitive areas on the movement of users, and their development using techniques and heterogeneous networks such as GSM, UMTS, UWB, using OMA standards.

The solution provided by the present invention is a method or mechanism that allows the collection and exchange of parameters relating to the location server in UWB networks, or other wireless networks that can be deployed in accordance with proprietary or non-standard schemes. However, although UWB networks (or others) may be organized in a private or proprietary scheme, the mechanism is based on the exchange of messages conforming to standards (MLP and ULP which is the standard protocol defined by the SUPL).

The method of the present invention focuses on the specific case of a tracking service using areas "sensitive" to associated events or notifications that are triggered automatically when the user enters, leaves, remains within or outside the area. These zones are typically associated with closed environments (indoors) where the use of techniques such as GPS is not possible, and where the use of cellular network positioning (Cell-ID and similar) may be insufficient for its poor accuracy.

The invention described herein is a mechanism or method designed primarily for application in the field of location-based services, and more specifically for the implementation of geographical areas that are sensitive to events triggered when a user (or terminal) performs a specific action in relation to the area (either enter or leave, or stay inside / outside).

The mechanism allows the deployment of location technologies based on UWB networks (or other similar networks not subject to uniformity, as in the case of carrier networks such as GSM or UMTS). UWB networks that allow the location of the devices connected to them may have architectures deployed under proprietary schemes not subject to standards, but the mechanism will allow the location by using standard-based messages. This is achieved through the exchange of additional messages, not included in the logical flow of the method or standard in order to obtain parameters required for the use or invocation of proprietary UWB networks.

In particular, the key method is based on obtaining the details of the location server located in the UWB network, which will be responsible of performing effectively the location of the terminal leveraging on the measures (power, signal...) received by other components of the UWB network. In principle, the details of this server's interfaces and location are unknown to the client, so the method described here can use these location techniques flexibly and dynamically, without coding or statically including the details of the UWB location server (since the terminal can be connected to different networks, UWB and details of each network may be different).

In order to use solutions as close to existing standards as possible, for some embodiments, the solution provided by the method of the invention uses a combination of messages specified by the standard MLP and SUPL (through its protocol ULP) of OMA, but extending these messages, the number of them, and their contents so that they can be used for other purposes not foreseen in the standard, as it is obtaining data servers deployed in a web site owner.

As mentioned above, the main innovative element is the design of a mechanism that allows a mobile to be located in different networks (UWB), without prior knowledge of the internals and architecture of these networks, and that the designed mechanisms are based on the use of messages whose format is defined by existing standards, which are extended or expanded to the new aim. Thus, it is possible to develop applications that support existing standards (such as SUPL 2.0) that can be used in environments not covered by current standards.

An extension of the SUPL 2.0 standard could be done to include the new messages and parameters described in the method of the invention, so that the mechanism could become part of the standard.

### Brief Description of the Drawings

The previous and other advantages and features will be more fully understood from the following detailed description of embodiments, with reference to the attached drawings, which must be considered in an illustrative and non-limiting manner, in which:
Figure 1 shows the conceptual architecture involved in the system where the method of the invention is applied, for an embodiment;
Figure 2 shows the sequence diagram with the message exchange among the different components of the system of Figure 1, according to an embodiment of the method of the invention; and
Figure 3 shows a flow diagram of the method of the invention for an embodiment.

### Detailed Description of Several Embodiments

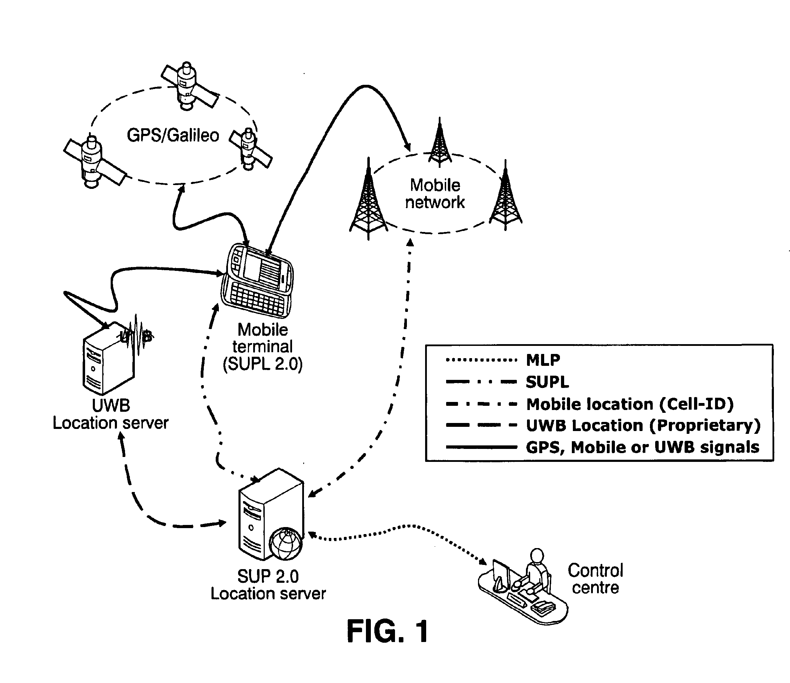

The method of the invention is described in the present section using as a practical example an implementation of a system for "sensitive" or "active" zones, devised for indoor location through Ultra Wide Band networks (UWB) using the SUPL 2.0 standard. The conceptual architecture involved in the system is shown in Figure 1, for an embodiment. For other embodiments, the mechanism or method can be also applied to other networks or mechanisms different to UWB (as might be those based on Bluetooth, ZigBee, etc.) if they share a similar logical structure (there is a central network server managing the location of the connected devices or sensors).

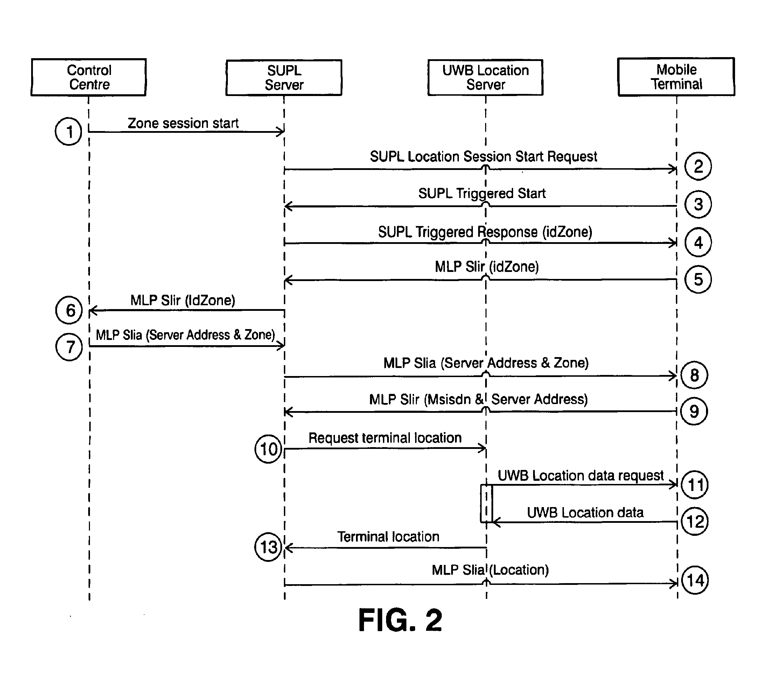

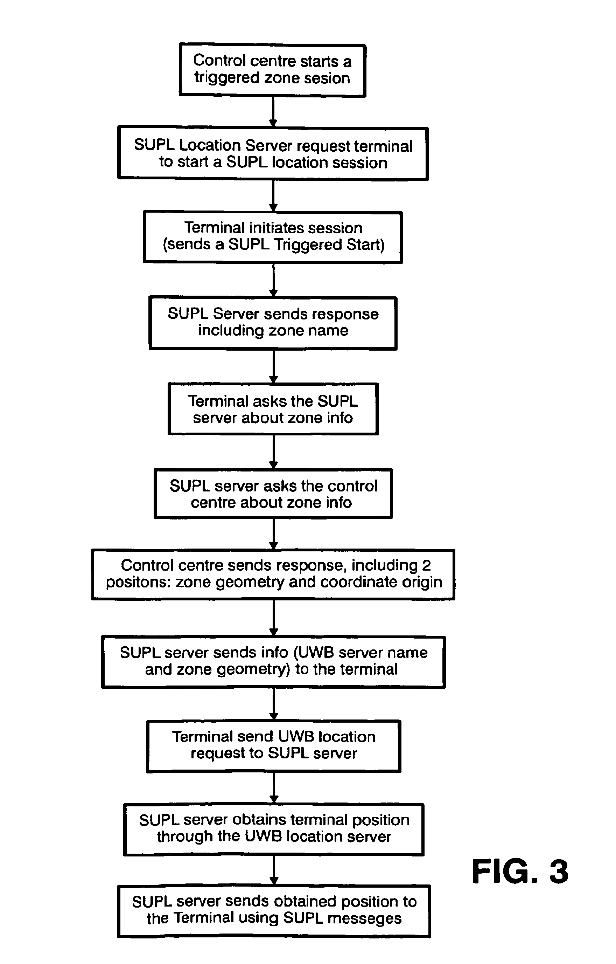

Next, with reference to Figures 2 and 3, the different steps performed according to the method of the invention for the embodiment there illustrated are described:
- In the first step, the control centre (or management centre) starts a trigger session (automatic events or triggers), indicating its area name and the URL where it will serve the requests and will listen to the events associated with the trigger being configured. This information is sent to the location server based on SUPL 2.0, which will communicate with mobile clients that are associated to events and "sensitive" geographical areas.
- In the second step, the SUPL 2.0 server sends and invitation to the mobile terminal to start a location session. This is done by a WAP Push type message (client does not have to make any action or being expressly waiting for this message to react)
- Third step would consist of the response of the client confirming the invitation to start the session. This is done by sending a "SUPL Triggered Start" message to the SUPL 2.0 server.
- The next step consists of the SUPL server responding to the client's Start message and confirming the request by a "SUPL Triggered Response" message, indicating in the message the name of the sensitive area being configured for the event notification service.
- Then, the terminal sends a SLIR-MLP message, with the received area identifier, to the SUPL 2.0 server, requesting the area information. This area information will be necessary so that the terminal can communicate with the UWB location server, and it is one of the key and innovative parts of the invention, since the configuration details for the UWB network are "proprietary" and may vary in different networks. The SLIR-MLP message to be sent will contain the area identifier (IdZone) in the structure:
   <msids><msid type="OPE_ID" enc="ASC">IdZone</msid></msids>
- In the next step, the SUPL server forwards the received question to the control centre (or management centre) in a similar way as for step 5. This way, the control centre will be actually in charge of providing the information and details on the area and UWB network.
- In step number 7, the management centre responds to the SUPL server with a SLIA message containing three key parameters, coded in "position" format:
   ∘ Information corresponding to the Access point of the UWB server (Ip:Port).
   ∘ Information corresponding to the geometry of the "sensitive" area, coded in "position" format.
   ∘ Position of the coordinates' origin of the "sensitive" area.

The necessity of the area's coordinate origin is due to the fact that the existing UWB location solutions are proprietary, and it may happen that the UWB location server estimates the terminal position as an offset from an origin position (that can be the UWB server's position). It is necessary to know that "reference position" (within the UWB network) to be capable of translating the location of the terminal with respect to that reference into absolute coordinates. In the case that the UWB location server handles absolute coordinates when estimating the position of the terminal, this second parameter on coordinate origin would not be required. The SLIA-MLP that is sent will contain this key information in the following message fields:
1.- Information about the UWB Server:
   <pos><msid type="OPE_ID">21.0.0.40:80</msid><pd><time/>
2.- Information about the sensitive area:
   <shape><Polygon>
   <coord><X>40.4472244303131 </X><Y>-3.654572159118988</Y></coord>
   <coord><X>40.44735180298813</X><Y>-3.6546192583396593</Y></coord>
   <coord><X>40.44746659389722</X><Y>-3.6543088237942047</Y></coord>
   <coord><X>40.44733922122219</X><Y>-3.6542617245735336</Y></coord>
   </Polygon></shape>
3.- Position of the Coordinate origin:
   <msid type="OPE_ID">origin@area</msid>
   <shape><Point>
   <coord><X>40.447224</X><Y>-3.654572</Y></coord>
   </Point></shape>
- In the next step, the SUPL server sends the sensitive zone information to the terminal, thus allowing the terminal to communicate and being located by the UWB server.
- Once the terminal has this information, the terminal, in order to obtain its own position via UWB, sends a SLIR-MLP message to the SUPL 2.0 server, with the MSISDN info for the terminal and the UWB server. The SLIR-MLP message to be sent will have this structure:
   <msid type="OPE_ID" enc="ASC">0034600123456@21.0.0.40:80</msid>
- The SUPL 2.0 server, once it has obtained the UWB identifier or tag associated to the mobile requesting the location, sends the request to the UWB server, which will be responsible for the estimation of the position of the mobile (as an offset from the coordinate origin).
- The next two steps (11 and 12) consist of the information exchange between the mobile terminal and the UWB server so the server can estimate the (relative) position of the mobile terminal using the UWB technology.
- The UWB server sends the estimated location to the SUPL 2.0 server.
- The SUPL 2.0 server sends the estimated UWB location to the requesting terminal via a SLIA-MLP message, so the mobile device can use or forward (to the terminal itself, to the management centre, etc.) this info later. This way it is possible to handle the events needed in the case that the mobile has "triggered" any of the actions (leaving, entering, staying inside/outside) associated to the sensitive area. If the UWB location node handles "relative" positions (referenced to a coordinate origin or its own position), the SUPL 2.0 server must perform the coordinate translation into absolute coordinates, so that the terminal may perform any operation or comparison in an efficient way. The SLIA-MLP message to be sent will contain the info according to the following structure:
   1. MSISDN info and UWB area requested in the SLIR-MLP message:
      <msid type="OPE_ID">0034600123456@21.0.0.40:80</msid>
   2. Location in the UWB area requested:
      <shape><Point srsName="www.epsg.org#4326">
      <coord><X>40.4619399624</X><Y>-3.81115094836</Y></coord>
      </Point></shape>

In order to illustrate the described mechanism three possible use cases are next described:
- Mobile advertising in shopping malls:
   One of the most popular location-based services since the dawn of these technologies has been the location-based advertising. In such services, the user may receive, automatically, advertising messages or other information that could be of some interest (such as discount coupons, special offers, etc...) when they are near a certain shop or a specific area.

This scenario is especially attractive in malls, where users walk through spaces that make up many shops or other services. Thus, when the user is walking through the mall, it is possible to display in the phone interesting information on stores that are in the area, which could be seen as a complement to the simple shop window.

But these scenarios are a technological challenge, since the majority of the malls are indoors, where precise GPS location (or satellite-based systems) is not possible. The alternative is the use of mobile network-based location (Cell-ID or variations/improvements), but in any case it is not possible to offer high accuracy allowing to know precisely the exact position of the user within the shopping centre. In addition, these solutions would not give information on the height at which the user is, what can be essential when you are in a mall with multiple floors.

The use of UWB-based location technology may be a perfect solution for these cases, since it allows fast and accurate location of the terminals in indoor environments.

By using standard protocols as described by the SUPL 2.0 standard, it would be possible to define geographic areas that would be sensitive to movements of the user, so that the information or advertising messages would be launched and received automatically as the user moves inside the mall.

However, this solution currently presents the problem that UWB networks are deployed following proprietary schemes (especially as regards the location components for these networks), so this solution would not work for shoppers without previous relationship with the mall, because the details of the UWB network are unknown.

With the solution proposed in this document, it would be possible for any user or terminal (without prior knowledge of the details of the UWB network) to be located, and thus "interact" with geographical areas defined by the platform location.

### - Management of security alarms:

There are geographical areas that should be supervised in the sense of controlling all access to the area by people. For example, this could be the case of safety facilities, military zones, or in general, any area where it is necessary to control every time a person enters or leaves.

In these cases, it is possible to define a sensitive area, regardless of whether they are indoor environments or outdoors, and deploy accurate location mechanisms (as may be based on UWB technologies or similar) so that anyone entering (or leaving) the area gives rise to an alarm event to be received by an alert management centre that will proceed accordingly.

With the method described in this document, it is possible to define these areas and the associated events in a flexible and interoperable way, regardless of whether they are open areas or closed, and regardless of whether the underlying location technology will be for GPS, mobile network positioning, UWB, etc. All management, as well as the activation and reception of events is done automatically without the user having to take any action, and without the operator of the management centre has to ask the state at all times, thereby establishing a secure and automatic monitoring of areas.

### - Tracking/vigilance of individuals with restricted mobility:

A case that could be similar to one described above is the case of users who, for some reason, have restrictions in their geographical mobility. This may be the case of persons on parole or probation, or the performance of restraining orders in cases of domestic abusers. Other possible cases would be for dependents or people with lack of orientation or Alzheimer's diseases or, for family members or caregivers who wish to establish "safe" areas and receive notifications if these people leave these areas.

In these cases, the method would be similar to that described above, since it would define the area or areas that are considered sensitive, and the events that will result in notifications (either by entering the area, by leaving it, by staying out it for some time, etc.). Once the areas, events, and associated actions have been defined, the mechanism described here would be functional regardless of whether they can be mixed-type areas (both indoor and outdoor) and with different location technologies (GPS, mobile network, WLAN, UWB). This is a very important aspect against solutions where a single location technology is employed, which may restrict the coverage or area where the location will be operational.

Some of the main advantages of the method of the invention are:
- The mechanism described here is based on the use of messages in accordance with standards (primarily MLP and ULP), although the number of messages and the information exchanged have been extended to support new functions. In this way, it is not necessary to specify new standards or messages using formats that may vary.
- The mechanism described here works for satellite-based positioning technologies (GPS / Galileo, and A-GPS) mobile network-based location, UWB, WiFi, etc.
- As an "open" mechanism, any new location technology that may arise in the future could be also used, as the logical scheme of operation is generic and only requires that the "location network" has an interface to the terminals to be located.
- It allows schemes of operation based on "sensitive areas" regardless the user may change the network or connection technologies, since it is not necessary to know the deployment details of for each network.
- The location mechanism allows that the UWB (or analogue) location network may either handle absolute coordinates internally or locate the mobile terminals with respect to a coordinates' origin within the network.

The improvements against existing problems and the innovative aspects of the method of the invention are the following:
- Current systems allow the definition of sensitive areas for events, but problems occur when these areas include indoor areas, since the GPS location is not possible and the mobile network positioning is imprecise. With the exposed method it is possible to have precise location at indoors (by UWB), additionally to other technologies already existing.
- The main innovation and improvement over existing technology is the fact that it is not necessary to know the internals of the deployment of the UWB network to estimate the location. Currently, and for the example case of A-GPS, the mobile device needs to know, somehow, the address of the A-GPS server to connect to. This can be done (now) by static coding the server address in a mobile configuration file, but this solution is unwieldy, and is only valid for global positioning technology such as GPS (as the mobile device only needs to know a single A-GPS server, globally available). However, in the case of network location and UWB, the same phone can be connected to different networks and it is not enough with knowing a single location server (since each network will have its own network server), so using a static and permanent address is not possible. It is necessary to have a mechanism so that the mobile terminal may find out, dynamically, the required parameters for each UWB network.
- The described solution can be proposed for inclusion in existing standards as an extension, so it is not necessary to specify new standards, making the already existing or developed applications to stop working. Thus, all existing applications will continue to function (with the characteristics and limitations for which they were designed), but new applications may arise taking advantage of the benefits provided by the new mechanism.

A person skilled in the art could introduce changes and modifications in the embodiments described without departing from the scope of the invention as it is defined in the attached claims.

### ACRONYMS AND ABBREVIATIONS

- A-GPS: Assisted GPS
- Cell-ID: Cell Identification
- GNSS: Global Navigation Satellite System
- GPS: Global Positioning System
- GSM: Global System for Mobile Communications
- IMS: IP Multimedia Subsystem
- IP: Internet Protocol
- LBS: Location-based Services
- LTE: Long Term Evolution
- MLP: Mobile Location Protocol
- PC: Personal Computer
- PDA: Personal Digital Assistant
- PND: Personal Navigation Device
- RFID: Radio-frequency identification
- SIP: Session Initiation Protocol
- SLIA: Standard Location Immediate Answer
- SLIR: Standard Location Immediate Request
- SUPL: Secure User Plane Location
- TCP: Transmission Control Protocol
- UDP: User Datagram Protocol
- ULP: User Plane Location Protocol
- UMTS: Universal Mobile Telecommunications System
- UWB: Ultra Wide Band
- WAP: Wireless Application Protocol

### REFERENCES

[1] OMA http://www.openmobilealliance.org

## Claims

1. Method for mobile location in a wireless network offering location-based services, comprising:
- defining and managing at least one area sensitive to the movements of user mobile processing devices,
- detecting events that occur automatically when a user mobile processing device interacts with said at least one defined area; and
- using a secure user plane location server for locating said user mobile processing device based on at least programmed triggers and/or on triggers associated to said detected events,
- starting, by a control or management center, a trigger zone session indicating at least said programmed triggers and/or said triggers and the name and address of said defined area, wherein said defined area is an indoor area;
the method being **characterised in that** further comprising:
- when said secure user plane location server has an unknown address or when a new location server, associated to said indoor defined area, needs to be used, determining said unknown address of said new location server by exchanging messages between said secure user plane location server and said user mobile processing device, said exchanged messages comprising messages specified by the standard MLP and messages specified by the standard SUPL, through its protocol ULP, of OMA; and
- obtaining said mobile location, by said secure user plane location server, via said new location server, said new location server being an Ultra Wide Band (UWB) location server.

2. Method as per claim 1, wherein said collected and exchanged parameters are in the form of standard-based messages.

3. Method as per claim 1 or 2, wherein said wireless network has architectures deployed under proprietary schemes not subject to standards.

4. Method as per claim 1, where said events are at least one of entering, leaving and staying inside/outside said indoor area.

5. Method as per claim 1, further comprising performing the next steps, sequentially:
- when said control or management center has started said trigger zone session, further sending (1), said control or management center, said information to said secure user plane location server, said secure user plane location server being based on SUPL 2.0 and intended for communicate with mobile computing device clients that are associated to events and "sensitive" geographical areas;
- sending (2), said SUPL 2.0 location server, an invitation to the user mobile computing device to start a location session;
- responding the client of the user mobile computing device to said invitation (3), once received, confirming the invitation to start the location session, by sending a "SUPL Triggered Start" message to the SUPL 2.0 location server;
- responding, the SUPL 2.0 location server, to said "SUPL Triggered Start" message and confirming the request by sending a "SUPL Triggered Response" message to the user mobile computing device, indicating in the message the name of said at least one indoor sensitive area (4);
- sending (5), the user mobile computing device, a SLIR-MLP message with an identifier for said at least one indoor sensitive area, to the SUPL 2.0 location server, requesting information about the at least one indoor sensitive area defined in the coverage of an UWB network supervised by an UWB location server;
- forwarding (6), the SUPL 2.0 server, the received SLIR-MLP message to the control or management centre in order the latter provides information and details of the indoor sensitive area defined in the coverage of an UWB network supervised by an UWB location server and information about the UWB location server itself;
- responding (7), the control or management centre, to the SUPL 2.0 location server with a SLIA-MLP message containing information at least corresponding to an access point of the UWB location server and to the geometry of the indoor sensitive area;
- sending (8), the SUPL 2.0 location server, said SLIA-MLP message, or another message including the same information, to the user mobile computing device in order to allow it to communicate and being located by the SUPL 2.0 location server could locate the user mobile computing device through the UWB location server;
- sending (9), the user mobile computing device, after receiving said SLIA-MLP message, a SLIR-MLP message to the SUPL 2.0 location server, with the MSISDN info for the user mobile computing device and for the UWB location server, in order to obtain the location of the user mobile computing device in the UWB network coverage;
- sending (10), the SUPL 2.0 location server, once it has received said SLIR-MLP message, a request to the UWB location server for the estimation of the position of the user mobile computing device via UWB;
- exchanging information (11, 12) between the user mobile computing device and the UWB location server so the latter can estimate the position of the user mobile computing device using the UWB technology.
- sending (13), the UWB location server, the estimated location of the user mobile computing device via UWB to the SUPL 2.0 location server; and
- sending (14), the SUPL 2.0 location server, the estimated location of the user mobile computing device via UWB, to the user mobile computing device via a SLIA-MLP message.

6. A method according to claim 1, wherein said defined and managed area sensitive to the movements of user mobile processing devices further includes an outdoor area.

## Patentansprüche

1. Verfahren zur mobilen Lokalisierung in einem drahtlosen Netzwerk, welches standortbezogene Dienste liefert, umfassend:
- das Definieren und Verwalten zumindest eines Bereichs, der empfindlich auf die Bewegungen von mobilen Verarbeitungsvorrichtungen von Nutzern reagiert,
- das Erfassen von Ereignissen, welche automatisch stattfinden, wenn eine Verarbeitungsvorrichtung eines Nutzers mit dem genannten zumindest einen definierten Bereich interagiert; und
- das Verwenden eines SUPL-(Secure User Plane Location)-Servers zum Lokalisieren der genannten mobilen Verarbeitungsvorrichtung eines Nutzers auf Grundlage von zumindest programmierten Triggern und/oder mit den genannten erfassten Ereignissen verknüpften Triggern,
- das Starten, durch ein Steuer- oder Verwaltungszentrum, einer Triggerzonensitzung, welche zumindest die genannten programmierten Trigger und/oder die genannten Trigger und den Namen und die Adresse des genannten definierten Bereichs angibt, wobei der genannte definierte Bereich ein Innenbereich ist;
wobei das Verfahren **dadurch gekennzeichnet ist, dass** es weiterhin Folgendes umfasst:
- wenn der genannte SUPL-Server eine unbekannte Adresse hat, oder wenn ein neuer Standortserver, welcher mit dem genannten definierten Innenbereich verknüpft ist, verwendet werden muss, das Bestimmen der genannten unbekannten Adresse des genannten neuen Standortservers durch ein Austauschen von Nachrichten zwischen dem genannten SUPL-Server und der genannten mobilen Verarbeitungsvorrichtung eines Nutzers durch deren ULP-Protokoll der OMA, wobei die genannten ausgetauschten Nachrichten solche Nachrichten umfassen, welche durch den MLP-Standard vorgegeben sind und solche Nachrichten, welche durch den SUPL-Standard vorgegeben sind; und
- das Erzielen der genannten mobilen Lokalisierung durch den genannten SUPL-Server über den genannten neuen Standortserver, wobei der genannte neue Standortserver ein Ultrabreitband-Standortserver ist.

2. Verfahren nach Anspruch 1, wobei die genannten gesammelten und ausgetauschten Parameter in Form von standardbezogenen Nachrichten vorliegen.

3. Verfahren nach Anspruch 1 oder 2, wobei das genannte drahtlose Netzwerk Architekturen aufweist, welche in Eigentümerschemen, die keinen Standards unterliegen, eingesetzt werden.

4. Verfahren nach Anspruch 1, wobei es sich bei den genannten Ereignissen zumindest um eines der folgenden Ereignisse handelt: das Betreten, Verlassen und Verbleiben innerhalb/außerhalb des genannten Innenbereichs.

5. Verfahren nach Anspruch 1, weiterhin umfassend das aufeinanderfolgende Durchführen der folgenden Schritte:
- wenn das genannte Steuer- oder Verwaltungszentrum die genannte Triggerzonensitzung gestartet hat, weiterhin das Senden (1) durch das genannte Steuer- oder Verwaltungszentrum der genannten Informationen zu dem genannten SUPL-Server, wobei der genannte SUPL-Server auf dem Standard SUPL 2.0 basiert und dazu vorgesehen ist, um mit Clients einer mobilen Rechenvorrichtung, welche mit Ereignissen und "sensiblen" geografischen Bereichen verknüpft sind, zu kommunizieren;
- das Senden (2) einer Aufforderung durch den genannten SUPL 2.0-Standortserver an die mobile Rechenvorrichtung eines Nutzers, eine Standortsitzung zu starten;
- das Antworten des Clients der mobilen Rechenvorrichtung eines Nutzers auf die genannte Aufforderung (3) nach deren Empfang, wobei die Aufforderung zum Starten der Standortsitzung durch das Senden einer "Start durch SUPL ausgelöst"-Nachricht an den SUPL 2.0-Standortserver bestätigt wird;
- das Antworten des SUPL 2.0-Standortservers auf die genannte "Start durch SUPL ausgelöst"-Nachricht und das Bestätigen der Anfrage durch Senden einer "Antwort durch SUPL ausgelöst"-Nachricht an die mobile Rechenvorrichtung eines Nutzers unter Angabe des Namens des genannten zumindest einen sensiblen Innenbereichs (4) in der Nachricht;
- das Senden (5) durch die mobile Rechenvorrichtung eines Nutzers einer SLIR-MLP-Nachricht mit einer Kennzeichnung für den genannten zumindest einen sensiblen Innenbereich an den SUPL 2.0-Standortserver, wobei Informationen bezüglich des zumindest einen sensiblen Innenbereichs, welcher in der Abdeckung eines durch einen Ultrabreitband-Standortserver überwachten Ultrabreitbandnetzes definiert ist, angefragt werden;
- das Weiterleiten (6) der empfangenen SLIR-MLP-Nachricht durch den SUPL 2.0-Server an das Steuer- oder Verwaltungszentrum, damit Letzteres Informationen und Details des sensiblen Innenbereichs, welcher in der Abdeckung eines Ultrabreitbandnetzes, das durch einen Ultrabreitband-Standortserver überwacht wird, definiert ist, und Informationen bezüglich des Ultrabreitband-Standortservers selbst liefert;
- das Antworten (7) durch das Steuer- oder Verwaltungszentrum gegenüber dem SUPL 2.0-Standortserver mit einer SLIA-MLP-Nachricht, welche Informationen beinhaltet, die zumindest einem Zugangspunkt des Ultrabreitband-Standortservers und der Geometrie des sensiblen Innenbereichs entsprechen;
- das Senden (8) durch den SUPL 2.0-Standortserver der genannten SLIA-MLP-Nachricht oder einer weiteren Nachricht, welche dieselben Informationen beinhaltet, an die mobile Rechenvorrichtung des Nutzers, um es ihr zu ermöglichen, zu kommunizieren, wobei durch das Lokalisieren durch den SUPL 2.0-Server die mobile Rechenvorrichtung eines Nutzers über den Ultrabreitband-Standortserver lokalisiert werden kann;
- das Senden (9) einer SLIR-MLP-Nachricht durch die mobile Rechenvorrichtung eines Nutzers, nachdem sie die genannte SLIA-MLP-Nachricht empfangen hat, an den SUPL 2.0-Standortserver mit den MSISDN-Informationen für die mobile Rechenvorrichtung eines Nutzers und für den Ultrabreitband-Standortserver, um den Standort der mobilen Rechenvorrichtung eines Nutzers in der Ultrabreitbandnetzabdeckung zu erhalten;
- das Senden (10) einer Anfrage durch den SUPL 2.0-Standortserver, nachdem dieser die genannte SLIR-MLP-Nachricht empfangen hat, an den Ultrabreitband-Standortserver zur Schätzung der Position der mobilen Rechenvorrichtung eines Nutzers per Ultrabreitband;
- das Austauschen von Informationen (11, 12) zwischen der mobilen Rechenvorrichtung eines Nutzers und dem Ultrabreitband-Standortserver, so dass Letzterer die Position der mobilen Rechenvorrichtung eines Nutzers unter Verwendung der Ultrabreitbandtechnologie schätzen kann,
- das Senden (13) des geschätzten Standorts der mobilen Rechenvorrichtung eines Nutzers per Ultrabreitband durch den Ultrabreitband-Standortserver an den SUPL 2.0-Standortserver; und
- das Senden (14) des geschätzten Standorts der mobilen Rechenvorrichtung eines Nutzers per Ultrabreitband durch den SUPL 2.0-Standortserver an die mobile Rechenvorrichtung eines Nutzers durch eine SLIA-MLP-Nachricht.

6. Verfahren nach Anspruch 1, wobei der genannte definierte und verwaltete Bereich, der sensibel auf die Bewegungen von mobilen Verarbeitungsvorrichtungen von Nutzern reagiert, weiterhin einen Außenbereich beinhaltet.

## Revendications

1. Procédé pour la localisation de téléphones mobiles dans un réseau sans fil proposant des services basés sur la localisation comprenant :
- la définition et la gestion d'au moins une zone sensible aux déplacements de dispositifs de traitement de téléphones mobiles d'utilisateurs,
- la détection d'événements qui se produisent automatiquement lorsqu'un dispositif de traitement du téléphone mobile d'un utilisateur interagit avec ladite au moins une zone définie ; et
- l'utilisation d'un serveur de localisation de plan d'utilisateur sécurisé pour localiser ledit dispositif de traitement du téléphone mobile de l'utilisateur basé sur au moins des déclencheurs programmés et/ou sur des déclencheurs associés auxdits évènements détectés,
- le démarrage, par un centre de contrôle ou de gestion, d'une session de zone de déclenchement indiquant au moins lesdits déclencheurs programmés et/ou lesdits déclencheurs et le nom et l'adresse de ladite zone définie, dans laquelle ladite zone définie est une zone intérieure ;
le procédé étant **caractérisé en ce qu**'il comprend en outre :
- lorsque ledit serveur de localisation de plan d'utilisateur sécurisé a une adresse inconnue ou lorsqu'un nouveau serveur de localisation, associé à ladite zone définie intérieure, doit être utilisé, la détermination de ladite adresse inconnue dudit nouveau serveur de localisation en échangeant des messages entre ledit serveur de localisation de plan d'utilisateur sécurisé et ledit dispositif de traitement de téléphone mobile de l'utilisateur, lesdits messages échangés comprenant des messages conformes au standard MLP et des messages conformes au standard SUPL, à travers de son protocole ULP, d'OMA ; et
- l'obtention de ladite localisation du téléphone mobile, par ledit serveur de localisation de plan d'utilisateur sécurisé, via ledit nouveau serveur de localisation, ledit nouveau serveur de localisation étant un serveur de localisation à Ultra Large Bande (ULB).

2. Procédé selon la revendication 1, dans lequel lesdits paramètres collectés et échangés sont sous la forme de messages basés sur des standards.

3. Procédé selon la revendication 1 ou 2, dans lequel ledit réseau sans fil a des architectures déployées sous des schémas propriétaires qui ne sont pas soumis aux standards.

4. Procédé selon la revendication 1, dans lequel lesdits événements sont au moins celui d'entrée, celui de sortie et celui de permanence à l'intérieur/à l'extérieur de ladite zone intérieure.

5. Procédé selon la revendication 1, comprenant en outre l'exécution des prochaines étapes séquentiellement :
- lorsque ledit centre de contrôle ou de gestion a démarré ladite session de zone de déclenchement, ledit centre de contrôle et de gestion envoie (1) en outre, ladite information audit serveur de localisation de plan d'utilisateur, ledit serveur de localisation de plan d'utilisateur étant basé sur SUPL 2.0 et prévu pour communiquer avec des clients du dispositif informatique mobile qui sont associés aux événements et aux zones géographiques « sensibles » ;
- ledit serveur de localisation SUPL 2.0 envoie (2) une invitation au dispositif informatique mobile de l'utilisateur pour démarrer une session de localisation ;
- le client du dispositif informatique mobile répond à ladite invitation (3), une fois reçue, il confirme l'invitation à démarrer la session de localisation, en envoyant un message « SUPL Triggered Start » au serveur de localisation SUPL 2.0 ;
- le serveur de localisation SUPL 2.0 répond audit message « SUPL Triggered Start » et confirme la requête en envoyant un message « SUPL Triggered Response » au dispositif informatique mobile de l'utilisateur, en indiquant dans le message le nom de ladite au moins une zone intérieure sensible (4) ;
- le dispositif informatique mobile de l'utilisateur envoie (5) un message SLIR-MLP avec un identifiant pour ladite au moins une zone intérieure sensible, au serveur de localisation SUPL 2.0, demande des informations sur ladite au moins une zone intérieure sensible définie dans la couverture d'un réseau ULB supervisée par un serveur de localisation ULB ;
- le serveur SUPL 2.0 transmet (6) le message SLIR-MLP reçu au centre de contrôle ou de gestion afin que ce dernier fournisse des informations et des détails sur la zone intérieure sensible définie dans la couverture d'un réseau ULB supervisé par un serveur de localisation ULB et des informations sur le propre serveur de localisation ULB ;
- le centre de contrôle et de gestion répond (7) au serveur de localisation SUPL 2.0 avec un message SLIA-MLP contenant des informations correspondant au moins à un point d'accès du serveur de localisation ULB et à la géométrie de la zone intérieure sensible ;
- le serveur de localisation SUPL 2.0 envoie (8) ledit message SLIA-MLP, ou un autre message incluant la même information, au dispositif informatique mobile de l'utilisateur afin qu'il puisse communiquer et être localisé par le serveur de localisation SUPL 2.0 pouvant localiser le dispositif informatique mobile à travers le serveur de localisation ULB ;
- le dispositif informatique mobile de l'utilisateur envoie (9) après réception dudit message SLIA-MLP, un message SLIA-MLP au serveur de localisation SUPL 2.0, avec les informations MSISDN pour le dispositif informatique mobile de l'utilisateur et pour le serveur de localisation ULB, afin d'obtenir la localisation du dispositif informatique mobile de l'utilisateur dans la couverture de réseau ULB ;
- le serveur de localisation SUPL 2.0 envoie (10) une fois ledit message SLIR-MLP reçu, une requête au serveur de localisation ULB pour l'estimation de la position du dispositif informatique mobile de l'utilisateur ULB ;
- des informations (11, 12) sont échangées entre le dispositif informatique mobile et le serveur de localisation ULB pour que ce dernier puisse estimer la position du dispositif informatique mobile de l'utilisateur en utilisant la technologie ULB.
- le serveur de localisation ULB envoie (13), la localisation estimée du dispositif informatique mobile de l'utilisateur via ULB au serveur de localisation SUPL 2.0 ; et
- le serveur de localisation SUPL 2.0 envoie (14) la localisation estimée du dispositif informatique mobile de l'utilisateur via ULB, au dispositif informatique mobile via un message SLIA-MLP.

6. Procédé selon la revendication 1, dans lequel ladite zone définie et gérée sensible aux déplacements des dispositifs de traitement de téléphones mobiles d"utilisateur inclut en outre une zone extérieure.
